# EUROPÄISCHE PATENTSCHRIFT

(11) **EP 3 377 818 B1**
(45) Veröffentlichungstag und Bekanntmachung des Hinweises auf die Patenterteilung: **03.06.2020**
(21) Anmeldenummer: 16816176.8
(22) Anmeldetag: 17.11.2016
(51) Int. Cl.: F23R 3/00, B01D 53/22, C01B 13/02, F02C 3/30, F23L 7/00, F01K 23/10

(54) **VORRICHTUNG ZUM BETRIEB EINER GASTURBINE MIT NASSER VERBRENNUNG**
APPARATUS FOR OPERATING A GAS TURBINE USING WET COMBUSTION
DISPOSITIF PERMETTANT DE FAIRE FONCTIONNER UNE TURBINE À GAZ À COMBUSTION HUMIDE

(30) Priorität: 18.11.2015 DE 102015119915
(43) Veröffentlichungstag der Anmeldung: 26.09.2018
(73) Patentinhaber: Fraunhofer-Gesellschaft zur Förderung der angewandten Forschung e.V., 80686 München (DE)
(72) Erfinder: KRIEGEL, Ralf, 07768 Kahla (DE)
(74) Vertreter: Oehmke, Volker
(86) Internationale Anmeldenummer: PCT/DE2016/100536
(87) Internationale Veröffentlichungsnummer: WO 2017/084656

(56) Entgegenhaltungen:
- WO-A1-2008/091158
- US-A1- 2015 267 611
- KOTOWICZ, J; MICHALSKI, S.: "Analysis of a gas turbine used in a high temperature membrane air separation unit", SCIENTIFIC JOURNALS MARITIME UNIVERSITY OF SZCZECIN, Bd. 31, Nr. 103, 2012, Seiten 128-133, XP002768909, in der Anmeldung erwähnt

## Beschreibung

Die Erfindung betrifft eine Vorrichtung zum Betrieb von Gasturbinen geringer (Mikrogasturbine) und mittlerer Baugröße mit Sauerstoff als Oxidationsmittel für den Brennstoff, wobei der Sauerstoff über gemischt leitende keramische MIEC-Membranen (Mixed Ionic Electronic Conductor) bei hoher Temperatur unter Verwendung der Prozessenergie des Gasturbinenprozesses erzeugt wird.

Die konventionelle Produktion von Sauerstoff erfolgt gegenwärtig bevorzugt durch Druckwechseladsorption (PSA - Pressure Swing Adsorption), Vakuum-Druckwechseladsorption (VPSA - Vacuum PSA) oder durch kryogene Luftzerlegung (Linde®-Verfahren). Großanlagen mit Durchsätzen von mehr als 5000 Nm³ O₂/h erreichen spezifische Energieverbräuche von etwa 0,4 kWh_{el.}/Nm³ O₂ (kryogen) bzw. 0,36 kWh_{el.}/Nm³ O₂ (VPSA). Bei reduzierten Ansprüchen an die Reinheit des Sauerstoffs können durch kryogene Luftzerlegungsanlagen minimale Energieverbräuche von ca. 0,33 kWh_{el.}/Nm³ O₂ erreicht werden, allerdings erst bei Produktionsraten von ca. 500 t O₂/h bzw. 350.000 Nm³ O₂/h [Fu, C., Gundersen, T.: Energy 44 (2012), S. 60-68].

Bei geringem Sauerstoffbedarf von Kleinverbrauchern werden üblicherweise kleinere PSA-Anlagen eingesetzt, die minimal 0,9 kWh_{el.}/Nm³ O₂ benötigen. Die Verwendung von Sauerstoff aus Flaschen oder Flüssigtanks bringt erhebliche Aufwendungen für Miete und Transport mit sich. Insgesamt ist ein Betrieb kleinerer Gasturbinen mit Sauerstoff unwirtschaftlich, da der Energiebedarf für die konventionelle Sauerstofferzeugung den Wirkungsgradzuwachs übersteigt oder die hohen Kosten einer Belieferung den Nutzeffekt überkompensieren.

Eine alternative Methode zur Herstellung von Sauerstoff basiert auf einem Membrantrennprozess bei hohen Temperaturen. Dafür werden gemischt leitende keramische Membranen (MIEC - Mixed Ionic Electronic Conductor) eingesetzt, die eine hochselektive Abtrennung von Sauerstoff ermöglichen. Der Sauerstofftransport beruht auf dem Transport von Oxidionen durch das gasdichte keramische Material und dem parallel stattfindenden Transport elektronischer Ladungsträger (Elektronen oder Defektelektronen). Seit den 1980er Jahren wurde eine Vielzahl keramischer Materialien hinsichtlich des Sauerstofftransports und weiterer Materialeigenschaften untersucht.

Die Sauerstoffpermeation durch eine MIEC-Membran kann durch die Wagner'sche Gleichung beschrieben werden und ist vor allem durch die ambipolare Leitfähigkeit des Materials bei Einsatztemperatur, die Membrandicke und durch die Triebkraft bestimmt. Letztere ergibt sich aus dem logarithmischen Verhältnis des Sauerstoffpartialdrucks im Feedgas (pₕ) zu dem Sauerstoffpartialdruck im Spülgas (pₗ) oder im Permeat. Der Sauerstofffluss durch eine MIEC-Membran ist demnach bei gegebenem Material, konstanter Membrandicke und festgelegter Temperatur proportional zu In(pₕ/pₗ). Dementsprechend hat eine Verdopplung von pₕ auf der Feedgasseite die gleiche Erhöhung des Sauerstoffflusses zur Folge wie eine Halbierung von pₗ auf der Permeat- oder Sweepgasseite. Zur Erzeugung reinen Sauerstoffs in technischen Membrananlagen kann dementsprechend die Luft verdichtet oder der Sauerstoff mit Vakuum abgesaugt werden; natürlich sind auch kombinierte Prozesse möglich.

Für großtechnische, prozessintegrierte MIEC-Membrananlagen wird bisher die Verdichtung der Luft propagiert, da Kompressoren im Allgemeinen billiger und besser verfügbar sind als Vakuumerzeuger. Für einen solchen Überdruck-Membrantrennprozess muss allerdings der gesamte Luftstrom verdichtet werden, so dass zunächst eine erhebliche Verdichtungsarbeit aufgewendet werden muss. Wird diese Kompressionsenergie der verdichteten Luft nicht zurückgewonnen, so liegt der Energiebedarf zur Erzeugung von Sauerstoff mit MIEC-Membranen über dem der kryogenen Luftzerlegung und der Druckwechseladsorption (PSA - Pressure Swing Adsorption). Deshalb wird beim Überdruckprozess typischerweise die Kompressionsenergie nach dem Membrantrennprozess durch Entspannung der komprimierten, sauerstoffabgereicherten Luft über eine Turbine zurückgewonnen. Dabei wird eine Rückgewinnung von mehr als 80 % angestrebt, indem hocheffiziente Kompressoren und Turbinen auf einer gemeinsamen Welle angeordnet werden.

Im Gegensatz zum Überdruckprozess auf Basis von MIEC-Membranen erfordert der alternative Vakuum-Membrantrennprozess keine Rückgewinnung der Kompressionsenergie, so dass auch eigenständige, nicht prozessintegrierte MIEC-Membrananlagen einen gegenüber kryogener Luftzerlegung, PSA und VPSA wettbewerbsfähigen Energieverbrauch erreichen können [DE 10 2013 107 610 A1].

Aus der thermodynamischen Betrachtung des Gasturbinenprozesses resultiert, dass bei festgelegter Brennstoffzufuhr dessen Effizienz bzw. Wirkungsgrad, also der Anteil der dem Prozess entnehmbaren Nutzarbeit, mit zunehmendem Sauerstoffgehalt der Verbrennungsluft zunimmt. Außerdem kann bei Verbrennung mit reinem Sauerstoff ein konzentrierter CO₂-Strom erzeugt werden, der eine Sequestrierung ermöglicht [AT 409 162 B]. Allerdings steigt bei einer Verbrennung mit Sauerstoff auch die Verbrennungstemperatur stark an, was eine technische Realisierung in den thermisch bereits hochbelasteten Gasturbinen bedeutend erschwert. Deshalb wird CO₂ zum Teil im Kreislauf geführt und Dampf zur Kühlung des Brennraums genutzt. In Kombination mit einer Dampfturbine (GUD-Kraftwerk) kann ein elektrischer Bruttowirkungsgrad von 64 % erreicht werden, der allerdings durch den Energiebedarf zur Sauerstofferzeugung und Sauerstoffverdichtung auf einen Nettowirkungsgrad von ca. 55 % abfällt [Jericha, H.; Sanz, W.; Göttlich, E.: Gasturbine mit CO2-Rückhaltung - 490 MW (Oxyfuel-System Graz Cycle). - in: VDI-Berichte Nr. 1965 - Stationäre Gasturbinen im Fokus von Wirtschaftlichkeit, Sicherheit und Klimaschutz, Leverkusen, 21. - 22. 11. 2006, S. 1 - 20]. Für die Bewertung der Vorteilhaftigkeit des Sauerstoffbetriebs einer Gasturbine muss dementsprechend der Energieaufwand zur Bereitstellung des Sauerstoffs der Steigerung der entnehmbaren Nutzarbeit gegenübergestellt und entsprechend berücksichtigt werden.

Wie bereits ausgeführt ist hinreichend bekannt, dass hohe Verbrennungstemperaturen durch Dampfeindüsung oder Wassereinspritzung merklich abgesenkt werden können (US 2009/0071648 A1). Wird bei einem reinen Gasturbinenprozess ohne Nachnutzung der Abwärme in einer Dampfturbine der Dampf mittels der Prozessabwärme des Abgases erzeugt und der Dampf dadurch bereits mit Überdruck in die Brennkammer der Gasturbine eingebracht, so werden Wirkungsgrade ähnlich zum GUD-Prozess (Gas- und Dampf-Kraftwerk) erreicht [Göke, S., Albin, E., Göckeler, K., Krüger, O., Schimek, S., Terhaar, S., Paschereit, C.O.: Ultra-wet combustion for high efficiency, low emission gas turbines. 6th Intern. Conf. "The Future of Gas Turbine Technology", paper ID 17, 17. - 18. 10. 2012, Brüssel, Belgien]. Dadurch kann der Wirkungsgradbereich eines GUD-Kraftwerkes bereits mit einer einzelnen Gasturbine erreicht werden, ohne dass weitere separate Komponenten wie Dampfturbine oder ORC-Anlage erforderlich sind.

Diese sogenannte "nasse Verbrennung" führt zu einer deutlich verbesserten Kühlung der Turbinenschaufeln und des Brennraums durch den eingebrachten vergleichsweise kalten Wasserdampf (200 - 400 °C). Dadurch kann auf die übliche Filmkühlung der Turbinenschaufeln mittels überschüssiger Luft weitgehend verzichtet werden, der Luftdurchsatz des Kompressors der Gasturbine und die erforderliche Kompressionsleistung sinken, der Anteil der Nutzarbeit bzw. der Wirkungsgrad steigen, Letzterer typischerweise um 15 - 20 %-Punkte. Außerdem führt die "nasse Verbrennung" zu einer merklichen Absenkung der NOₓ-Emissionen. Als schwierig erweist sich jedoch bei einer "nassen Verbrennung" mit Luft die Realisierung eines stabilen Verbrennungsvorganges, da sich Flammenausbreitungsgeschwindigkeiten und Zündgrenzen durch den hohen Gehalt an Wasserdampf im Brennstoff-Luft-Gemisch stark verändern.

Bei der Verbrennung von Brennstoffen in Gemischen aus Sauerstoff und Wasserdampf bleiben einerseits die vorgenannten Vorteile einer "nassen Verbrennung" erhalten, andererseits kann auch die Verbrennungstemperatur durch noch höhere Dampfgehalte hinreichend niedrig gehalten werden. Ein zusätzlicher Vorteil resultiert entsprechend den obigen Ausführungen daraus, dass gegenüber der "nassen Verbrennung" mit Luft bei Verbrennung mit Sauerstoff ein Abgas mit hohem CO₂-Gehalt und hohem Wasserdampfgehalt entsteht, also bereits bei einfachen Gasturbinen im Kleinmaßstab eine CO₂-Abtrennung ermöglicht wird. Außerdem kann der Großteil des im Rauchgas enthaltenen Wasserdampfes auskondensiert und wieder in die Dampferzeugung zurückgeführt werden, so dass dem Prozess zusätzliches Wasser nur zum Ausgleich der Verluste zugeführt werden muss.

Gegenwärtig wird aus diesen Gründen ein Konzept zur "nassen Verbrennung" von Wasserstoff mit Sauerstoff in der Gasturbine verfolgt [Medieninformation 42/2015 vom 24.02.2015 der Technischen Universität Berlin]. Dabei sollen Wasserstoff und Sauerstoff durch Wasserelektrolyse aus regenerativem Überschussstrom erzeugt werden. Ziel der Entwicklung ist dementsprechend die Zwischenspeicherung elektrischer Energie aus erneuerbaren Quellen (Windstrom, Photovoltaik) in Form von komprimierten Gasen (H₂, O₂) und deren Rückverstromung mit der Gasturbine. Da bei der Wasser-Elektrolyse pro Norm-m³ Wasserstoff jedoch mindestens 4 kWh Elektroenergie, pro Norm-m³ Sauerstoff sogar 8 kWh Elektroenergie benötigt werden, erscheint unter energetischen Gesichtspunkten eine Bereitstellung von elektrolytisch erzeugtem Sauerstoff für eine Sauerstoffverbrennung von konventionellen Brennstoffen nicht sinnvoll. Der beschriebene Ansatz ist somit lediglich zur Zwischenspeicherung von Überschussstrom geeignet.

Wenn jedoch der Energieverbrauch zur Bereitstellung des Sauerstoffs entsprechend den vorgenannten Betrachtungen bereits für die geringen Gasdurchsätze von Mikrogasturbinen drastisch reduziert werden kann, resultiert auch ein entsprechender Nutzeffekt für die Verbrennung konventioneller Brennstoffe. Dementsprechend wurden auch bereits mehrfach Verfahrenskonzepte zur Energieproduktion beschrieben, bei denen MIEC-Membranen zur prozessintegrierten Erzeugung von Sauerstoff eingesetzt werden.

Die bisher beschriebenen Verfahrenskonzepte, wie auch beispielsweise durch die WO 2008/091158 A1 offenbart, nutzen komprimierte Luft, um die Triebkraft zur Abtrennung des Sauerstoffs bereit zu stellen. Für einen Überdruck-Membrantrennprozess muss der gesamte Luftstrom verdichtet werden. Ein Großteil der aufgewendeten Kompressionsenergie muss deshalb nach dem Trennprozess durch Entspannung der komprimierten, sauerstoffabgereicherten Luft über eine Turbine zurückgewonnen werden. Typischerweise wird die Turbine demnach primär zur Rückgewinnung der Kompressionsenergie eingesetzt [US 5 852 925 A]. Durch zusätzliche Verbrennung eines Brennstoffs mit dem komprimierten, sauerstoffabgereicherten Luftstrom kann dabei sogar noch zusätzlich Energie erzeugt werden, so dass eine Koproduktion von Elektroenergie und Sauerstoff möglich wird. Eine Verbrennung des Brennstoffes mit Sauerstoff ist bei diesem Konzept jedoch nicht vorgesehen.

In neuartigen Kraftwerkskonzepten für IGCC-Kraftwerke (Integrated Gasification Combined Cycle) wird der Einsatz von Sauerstoff für die Vergasung des Brennstoffes beansprucht [WO 2009/106027 A2]. Es erscheint deshalb naheliegend, MIEC-Membranen auch für die Bereitstellung des für die Brennstoffvergasung notwendigen Sauerstoffs einzusetzen [WO 2008/105982 A1].

Die Kopplung von MIEC-Membranen und die Nutzung des erzeugten Sauerstoffs für die Verbrennung in der Brennkammer der Gasturine wurde bereits vorgeschlagen und energetisch bewertet [Kotowicz, J. Michalski, S.: Analysis of a gas turbine used in a high temperature membrane air separation unit. Scientific Journals Maritime University of Szczecin, 2012, 31 (103), p. 128 - 133]. Der vorgeschlagene Prozess beruht entsprechend dem dargelegten Stand der Technik auf der Kompression der Luft, um den Sauerstoff über die MIEC-Membranen abzutrennen. Er erfordert aufgrund des hohen Aufwandes an Kompressionsenergie deshalb eine Nutzung der sauerstoffabgereicherten, komprimierten Abluft in der Turbine, um die eingebrachte Kompressionsenergie zurückzugewinnen. Trotz der hohen Effizienz der eingesetzten Turbokomponenten, d. h. von 88 % beim Luftverdichter und von 90 % bei der Turbine, resultiert für diesen Prozess ein Abfall des elektrischen Wirkungsgrades des Gesamtsystems von 35 % auf 29 %. Dementsprechend ist ein solcher Prozess nur wirtschaftlich sinnvoll, wenn die Abtrennung des CO₂ durch den Ertrag entsprechender Zertifikate den Wirkungsgradabfall ökonomisch überkompensiert.

Nach dem Stand der Technik führt demnach eine Verbrennung von Brennstoffen in Gasturbinen mit prozessintern erzeugtem Sauerstoff gegenüber einer einfachen Verbrennung mit Luft stets zu einer Verringerung der dem Gesamtsystem entnehmbaren Nutzarbeit bzw. zur Absenkung des Netto-Wirkungsgrades. Ursache dafür ist der Energieaufwand für die Sauerstofferzeugung mit MIEC-Membranen, da diese bei den bisher propagierten Systemen stets durch einen Überdruckprozess erfolgt. Offensichtlich übersteigt in diesem Fall trotz Rückgewinnung der Kompressionsenergie und trotz Verwendung hocheffizienter Turbokomponenten der energetische Aufwand zur Bereitstellung des Sauerstoffs den Nutzeffekt der intensivierten Verbrennung.

Der Erfindung liegt die Aufgabe zugrunde, eine Möglichkeit zu finden, um den elektrischen Wirkungsgrad kleiner und mittlerer Gasturbinen signifikant zu erhöhen.

Die Aufgabe wird durch eine Vorrichtung gemäß Anspruch 1 gelöst.

Die Figuren zeigen:
- Fig. 1: ein erfindungsgemäßes Verfahrensschema zum Betrieb einer Gasturbine mit nasser Verbrennung, wobei die kinetische Energie der Gasturbine zur Sauerstoffabsaugung und Verdichtung eingesetzt wird,
- Fig. 2: ein erfindungsgemäßes Verfahrensschema zum Betrieb einer Gasturbine mit nasser Verbrennung, wobei die Triebkraft aus der Abwärme der Gasturbine erzeugt wird,
- Fig. 3: ein Verfahrensschema zum Betrieb einer Gasturbine mit nasser Verbrennung im Sauerstoff-Dapf-Gemisch und mit Sauerstofferzeugung über MIEC-Membranen, die durch einen angepassten Verdichter der Gasturbine abgesaugt werden, und
- Fig. 4: ein Verfahrensschema zum Betrieb einer Gasturbine mit nasser Verbrennung durch kontrollierte Zirkulation eines Gasgemisches aus CO₂ und Dampf.

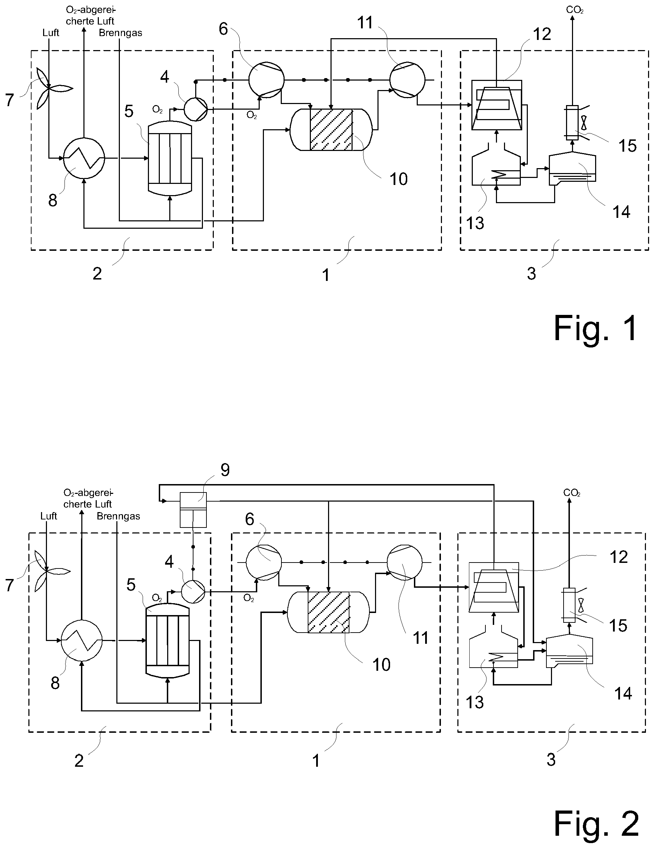

In einem ersten Ausführungsbeispiel soll anhand von Fig. 1 das erfindungsgemäße Verfahrensprinzip erläutert werden. Es wird eine konventionelle Capstone C50 Mikrogasturbine, gemäß Fig. 1 als Gasturbine 1 schematisch dargestellt, mit einem elektrischen Wirkungsgrad von 28 % bei Luftbetrieb und einem Brennstoffverbrauch von 18 Nm³ Erdgas/h eingesetzt. Diese wird mit einem Sauerstofferzeuger 2 und mit einem Dampferzeuger 3 gekoppelt. Der Sauerstofferzeuger 2 wird auf eine Produktionsmenge von 36 Nm³ O₂/h ausgelegt. Die Frischluft wird durch einen einfachen Lüfter 7 durch den Wärmetauscher 8 und das sich daran anschließende Membranmodul 5 geleitet. Das Absaugen des Sauerstoffs übernimmt eine Flüssigkeitsringpumpe 4, die den Sauerstoff aus dem Membranmodul 5 abzieht und dem Verdichter 6 der Gasturbine 1 zuleitet. Der Verdichter 6 der Gasturbine 1 verdichtet den aus der Flüssigkeitsringpumpe 4 austretenden Sauerstoff auf ca. 5 bara (a - absolut) und drückt diesen in die Brennkammer 10 der Gasturbine 1. Durch Variation der in die Brennkammer 10 eintretenden Dampfmenge wird deren Temperatur auf die üblichen Betriebstemperaturen begrenzt. Die zum Ausgleich der thermischen Verluste erforderliche Beheizung des Membranmoduls 5 erfolgt durch Verbrennung von ca. 1 Nm³ Erdgas/h mit der O₂-abgereicherten Luft innerhalb des Membranmoduls 5. Das Abgas der Turbine 11 wird zur Dampferzeugung genutzt, indem es zunächst einem Überhitzer 12 und anschließend dem Verdampfer 13 zugeführt wird. Zur Erzeugung der Triebkraft für die O₂-Separation wird somit nur ein geringer Teil der kinetischen Energie der Gasturbine 1 eingesetzt.

Der Abgasstrom wird durch den Kondensatsammler 14 zum luftgekühlten Abgaskühler 15 geleitet, der überschüssiges Wasser auskondensiert und in den Kreislauf zurückführt.

Durch die nasse Verbrennung mit Sauerstoff steigt der elektrische Bruttowirkungsgrad der konventionellen Capstone C50 Mikrogasturbine auf 34 %. Da etwa 1 Nm³ Erdgas/h zusätzlich für die Beheizung des Membranmoduls 5 verbraucht wird und sich dadurch der gesamte Gasverbrauch auf ca. 19 Nm³ Erdgas/h erhöht, resultiert ein elektrischer Nettowirkungsgrad des Gesamtsystems von 32 %. Neben dieser Erhöhung des elektrischen Wirkungsgrades von 28 % auf 32 % steht darüber hinaus ein Abgasstrom aus nahezu reinem CO₂ für die stoffliche Verwertung zur Verfügung, die Abwärme kann wie bisher genutzt werden.

Der Grundaufbau des zweiten Ausführungsbeispiels entspricht in seinen wesentlichen Komponenten dem des ersten Ausführungsbeispiels. Es wird wiederum als Gasturbine 1 eine konventionelle Capstone C50 Mikrogasturbine eingesetzt und gemäß Fig. 2 mit einem Sauerstofferzeuger 2 und mit einem Dampferzeuger 3 gekoppelt. Der Sauerstofferzeuger 2 wird auf eine Produktionsmenge von 36 Nm³ O₂/h ausgelegt. Zum Absaugen des Sauerstoffs wird wiederum eine Flüssigkeitsringpumpe 4 eingesetzt, die den Sauerstoff aus dem Membranmodul 5 abzieht und dem Verdichter 6 der Gasturbine 1 zuleitet. Die Frischluft wird durch einen einfachen Lüfter 7 durch den Wärmetauscher 8 und das Membranmodul 5 geleitet. Der Verdichter 6 der Gasturbine 1 verdichtet den Sauerstoff auf ca. 5 bara (a - absolut). Durch Variation der Dampfmenge wird die Temperatur in der Brennkammer 10 auf die üblichen Betriebstemperaturen begrenzt. Die zum Ausgleich der thermischen Verluste erforderliche Beheizung des Membranmoduls 5 erfolgt durch Verbrennung von ca. 1 Nm³ Erdgas/h mit der O₂-abgereicherten Luft innerhalb des Membranmoduls 5. Das Abgas der Turbine 11 wird zur Dampferzeugung genutzt, indem es zunächst einem Überhitzer 12 und anschließend dem Verdampfer 13 zugeführt wird. Der entstehende Dampf wird zum Betrieb des Dampfmotors 9 benutzt, der wiederum die Flüssigkeitsringpumpe 4 antreibt. Zur Erzeugung der Triebkraft für die O₂-Separation wird demnach lediglich die Abwärme der Gasturbine 1 eingesetzt. Der Abgasstrom wird durch den Kondensatsammler 14 zum luftgekühlten Abgaskühler 15 geleitet, der überschüssiges Wasser auskondensiert und in den Kreislauf zurückführt.

Durch die nasse Verbrennung mit Sauerstoff steigt der elektrische Bruttowirkungsgrad der konventionellen Capstone C50 Mikrogasturbine auf 41 %. Da etwa 1 Nm³ Erdgas/h zusätzlich für die Beheizung des Membranmoduls 5 verbraucht wird und sich dadurch der gesamte Gasverbrauch auf ca. 19 Nm³ Erdgas/h erhöht, resultiert ein elektrischer Nettowirkungsgrad des Gesamtsystems von 39 %. Neben dieser Erhöhung des elektrischen Wirkungsgrades von 28 % auf 39 % steht darüber hinaus ein Abgasstrom aus nahezu reinem CO₂ für die stoffliche Verwertung zur Verfügung, die Abwärme kann wie bisher genutzt werden.

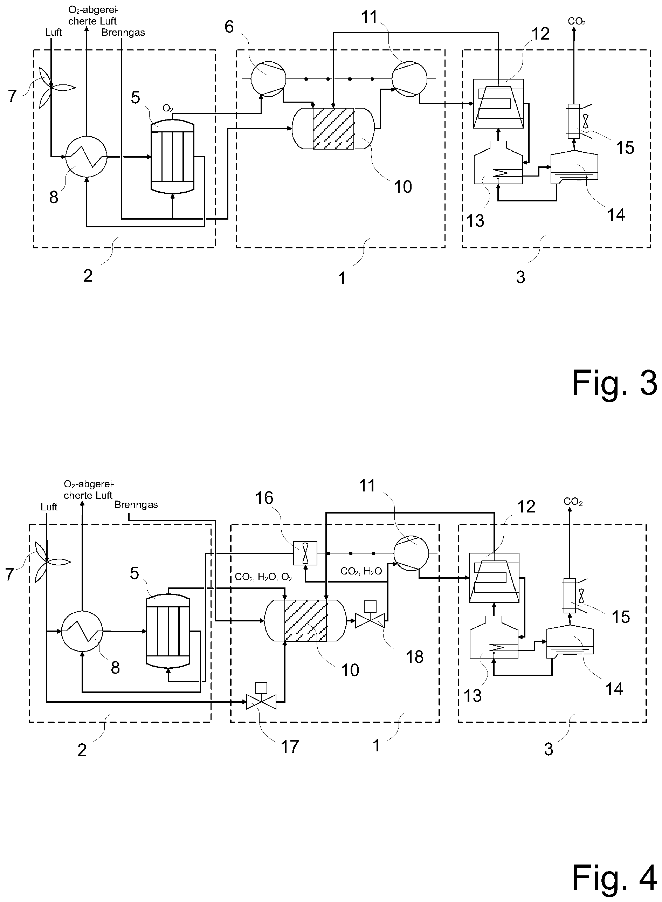

Im dritten Ausführungsbeispiel kommt als Gasturbine 1 eine konventionelle Capstone C65 Mikrogasturbine zum Einsatz, deren Verdichter 6 für eine Verdichtung des Sauerstoffs von 0,09 bara (a - absolut) auf 5 bara nachgerüstet wurde. Die Frischluft wird gemäß Fig. 3 durch einen einfachen Lüfter 7 durch den Wärmetauscher 8 und das Membranmodul 5 geleitet.

Der Verdichter 6 der Gasturbine 1 verdichtet den mit ca. 0,09 bara eintretenden Sauerstoff auf ca. 5 bara. Der gesamte Abgasstrom der Turbine 11 mit einer Abwärmeleistung von 126 kW wird im Überhitzer 12 und im Verdampfer 13 zur Dampferzeugung genutzt. Es wird ein Dampfdruck von >5 bara erreicht, so dass der Dampf direkt in die Brennkammer 10 eingebracht werden kann, wo er zur Regulierung der Abgastemperatur eingesetzt wird. Die zum Ausgleich der thermischen Verluste erforderliche Beheizung des Membranmoduls 5 erfolgt durch Verbrennung von ca. 1,4 Nm³ Erdgas/h mit der O₂-abgereicherten Luft innerhalb des Membranmoduls 5. Der Abgasstrom wird durch den Kondensatsammler 14 zum luftgekühlten Abgaskühler 15 geleitet, der überschüssiges Wasser auskondensiert und in den Kreislauf zurückführt.

Bei Verbrennung mit Luft ist der zu verdichtende Massenstrom durch die Gasturbine 1 ca. 7-fach höher als der Massenstrom des reinen Sauerstoffs aus dem Sauerstofferzeuger 2. Dementsprechend sinkt die erforderliche Kompressionsarbeit im Sauerstoffbetrieb auf etwa 1/7. Der Massenstrom durch die Turbine 11 sinkt zwar ebenfalls, wird aber durch den zusätzlichen Dampfmassenstrom durch die Brennkammer 10 wiederum erhöht. Dafür wird lediglich die Abwärme des Abgasstroms eingesetzt. Insgesamt steigt durch die nasse Verbrennung mit Sauerstoff der elektrische Bruttowirkungsgrad der modifizierten Capstone C65 Mikrogasturbine auf 50 %. Da etwa 1,4 Nm³ Erdgas/h zusätzlich für die Beheizung des Membranmoduls 5 verbraucht wird und sich dadurch der gesamte Gasverbrauch auf ca. 24 Nm³ Erdgas/h erhöht, resultiert ein elektrischer Nettowirkungsgrad des Gesamtsystems von 47 %. Neben dieser Erhöhung des elektrischen Wirkungsgrades von 29 % auf 47 % steht darüber hinaus ein Abgasstrom aus nahezu reinem CO₂ für die stoffliche Verwertung zur Verfügung, die Abwärme kann wie bisher genutzt werden.

In dem vierten Ausführungsbeispiel wird als Gasturbine 1 lediglich der Turbinenteil einer konventionellen Capstone C30 Mikrogasturbine eingesetzt, da der Verdichter 6, siehe Fig. 4, entfernt wurde. Die Turbine 11 treibt einen Heißgasventilator 16 an, der einen Teil des Abgases der Brennkammer 10 als Heißgasstrom aus Dampf und CO₂ mit niedrigem Sauerstoffpartialdruck in das Membranmodul 5 als Spülgas einbringt. Der Heißgasventilator 16 benötigt wesentlich weniger Energie als ein Verdichter 6, der üblicherweise Bestandteil einer Gasturbine 1 ist, da die zirkulierenden Gase nicht verdichtet werden müssen. Die Gasturbine 1 wird mit einem offenen ersten Anfahrventil 17 und einem offenen zweiten Anfahrventil 18 angefahren, indem die Brennkammer 10 zunächst mit Luft als Oxidationsmittel betrieben wird, bis das Membranmodul 5 und die Brennkammer 10 die normale Betriebstemperatur erreicht haben. Anschließend werden erstes Anfahrventil 17 und zweites Anfahrventil 18 geschlossen. Da im zirkulierenden Abgasteilstrom aufgrund der kontinuierlichen weiteren Zugabe von Brenngas der Sauerstoffpartialdruck niedrig bleibt, tritt Sauerstoff im Membranmodul 5 aus der Luft in den Abgasstrom ein und oxidiert dabei das zugegebene Brenngas. Es kommt dabei zur allmählichen Druckerhöhung bis auf den Betriebsdruck von 5 bara. Ab diesem Druck wird das Abgas auf die Turbine 11 geleitet und über diese expandiert. Der gesamte Abgasstrom der Turbine 11 mit einer Abwärmeleistung von 68 kW wird im Überhitzer 12 und im Verdampfer 13 zur Dampferzeugung genutzt. Es wird ein Dampfdruck von >5 bara erreicht, so dass der Dampf ohne Nachverdichtung direkt in die Brennkammer 10 eingebracht werden kann, wo er zur Regulierung der Temperatur eingesetzt wird. Der Ausgleich der thermischen Verluste des Membranmoduls 5 erfolgt durch den zirkulierenden Abgasteilstrom. Der Abgasstrom wird durch den Kondensatsammler 14 zum luftgekühlten Abgaskühler 15 geleitet, der überschüssiges Wasser auskondensiert und in den Kreislauf zurückführt.

Nach dem Anfahren benötigt die Gasturbine 1 in diesem vierten Ausführungsbeispiel im normalen Betrieb keinerlei Energie zur Komprimierung von Luft oder Sauerstoff, da der Sauerstoff selbsttätig in den zirkulierenden Abgasteilstrom eintritt. Insgesamt steigt deshalb gegenüber den vorhergehenden Ausführungsbeispielen nochmals der Wirkungsgrad, d. h. der Anteil der dem System entnehmbaren Nutzarbeit, auf 65 %. Wiederum steht ein Abgasstrom aus nahezu reinem CO₂ für die stoffliche Verwertung zur Verfügung.

### Bezugszeichenliste

- 1: Gasturbine
- 2: Sauerstofferzeuger
- 3: Dampferzeuger
- 4: Flüssigkeitsringpumpe
- 5: Membranmodul
- 6: Verdichter (der Gasturbine 1)
- 7: Lüfter
- 8: Wärmetauscher
- 9: Dampfmotor
- 10: Brennkammer
- 11: Turbine
- 12: Überhitzer
- 13: Verdampfer
- 14: Kondensatsammler
- 15: Abgaskühler
- 16: Heißgasventilator
- 17: erstes Anfahrventil
- 18: zweites Anfahrventil

## Patentansprüche

1. Vorrichtung zum Betrieb einer Gasturbine (1) mit nasser Verbrennung, wobei der Gasturbine (1) ein Sauerstofferzeuger (2) vorgeordnet und ein Dampferzeuger (3) nachgeordnet ist, wobei die Gasturbine (1) einen Verdichter (6), eine Brennkammer (10) und eine stromerzeugende Turbine (11) aufweist,
**dadurch gekennzeichnet, dass** der Sauerstofferzeuger (2) ein MIEC (Mixed Ionic Electronic Conductor)-Membranmodul (5) mit vorgeordnetem Wärmetauscher (8) und Lüfter (7) enthält, der Dampferzeuger (3) einen Überhitzer (12), einen Verdampfer (13), einen Kondensatsammler (14) und einen luftgekühlten Abgaskühler (15) enthält, wobei
- der Verdichter (6) über eine Flüssigkeitsringpumpe (4) mit dem Membranmodul (5) eine Verbindung aufweist,
- der Überhitzer (12) zum Einleiten von Dampf in die Brennkammer (10) mit dieser eine Verbindung aufweist, wobei das Einleiten zum Halten der üblichen Betriebstemperatur geregelt erfolgt, und
- zum Ausgleich der thermischen Verluste eine Beheizung des Membranmoduls (5) vorgesehen ist.

2. Vorrichtung nach Anspruch 1, wobei zwischen Uberhitzer (12) und Brennkammer (10) ein Dampfmotor (9) angeordnet ist, der die Flüssigkeitsringpumpe (4) antreibt.

## Claims

1. Apparatus for operating a gas turbine (1) using wet combustion, wherein an oxygen generator (2) is arranged upstream of the gas turbine (1) and a steam generator (3) is arranged downstream of the gas turbine (1), wherein the gas turbine (1) comprises a compressor (6), a combustion chamber (10) and a power generating turbine (11),
**characterised in that**
the oxygen generator (2) includes an MIEC (Mixed Ionic Electronic Conductor) membrane module (5) with a heat exchanger (8) and a blower (7) arranged upstream thereof, said steam generator (3) including a superheater (12), an evaporator (13), a condensate collector (14) and an air-cooled exhaust gas cooler (15), wherein
- the compressor (6) is connected to the membrane module (5) via a liquid ring pump (4),
- the superheater (12) has a connection with the combustion chamber (10) for introducing steam into the latter, wherein said introduction is performed in a controlled manner so as to maintain the usual operating temperature, and
- heating of the membrane module (5) is provided in order to compensate for thermal losses.

2. The apparatus according to claim 1, wherein a steam motor (9) driving the liquid ring pump (4) is arranged between the superheater (12) and the combustion chamber (10).

## Revendications

1. Dispositif permettant de faire fonctionner une turbine à gaz (1) à combustion humide, un générateur d'oxygène (2) étant disposé en amont de la turbine à gaz (1) et un générateur de vapeur (3) étant disposé en aval, la turbine à gaz (1) comportant un compresseur (6), une chambre de combustion (10) et une turbine génératrice d'électricité (11),
**caractérisé en ce que**
le générateur d'oxygène (2) contient un module à membrane à conduction électronique et ionique mixte (5) avec un échangeur de chaleur (8) et un ventilateur (7) en amont, le générateur de vapeur (3) contient un surchauffeur (12), un évaporateur (13), un collecteur de condensat (14) et un refroidisseur de gaz d'échappement refroidi par air (15), dans lequel
- le compresseur (6) est relié au module à membrane (5) par une pompe à anneau liquide (4),
- le surchauffeur (12) est en communication avec la chambre de combustion (10) pour introduire de la vapeur dans la chambre de combustion (10), l'introduction étant contrôlée pour maintenir la température de fonctionnement normale, et
- le chauffage du module à membrane (5) est prévu de manièrer à compenser les pertes thermiques.

2. Dispositif selon la revendication 1, dans lequel un moteur à vapeur (9) est disposé entre le surchauffeur (12) et la chambre de combustion (10) et entraîne la pompe à anneau liquide (4).
